# EUROPÄISCHE PATENTSCHRIFT

(11) **EP 2 458 241 B1**
(45) Veröffentlichungstag und Bekanntmachung des Hinweises auf die Patenterteilung: **02.01.2019**
(21) Anmeldenummer: 11190788.7
(22) Anmeldetag: 25.11.2011
(51) Int. Cl.: F16D 69/02

(54) **Verfahren zur Herstellung eines Reibelementes**
Method for producing a friction element
Procédé de fabrication d'un élément de friction

(30) Priorität: 26.11.2010 AT 19812010
(43) Veröffentlichungstag der Anmeldung: 30.05.2012
(73) Patentinhaber: Miba Frictec GmbH, 4661 Roitham (AT)
(72) Erfinder: Tsioptsias, Zisis, 4810 Gmunden (AT)
(74) Vertreter: Burger, Hannes

(56) Entgegenhaltungen:
- EP-A1- 0 892 896
- EP-A1- 1 621 790
- EP-A2- 1 413 793
- EP-A2- 1 521 010
- EP-A2- 1 750 031
- US-A1- 2009 169 836

## Beschreibung

Die Erfindung betrifft einen Reibbelag umfassend oder bestehend aus zumindest ein(em) Harz oder eine(r) Harzmischung, das oder die die Matrix des Reibbelages bildet, und reibungsmodifizierende(n) Partikel und Fasern, wobei der Anteil des Harzes zwischen 20 Gew.-% und 70 Gew.-% und der Gesamtanteil an den reibungsmodifizierenden Partikel und Fasern zwischen 30 Gew.-% und 80 Gew.-% beträgt, wobei weiter der Anteil an Fasern ausgewählt ist aus einem Bereich mit einer unteren Grenze von 2 Gew.-% und 15 Gew.-%, und die reibungsmodifizierenden Partikel durch eine Mischung aus Kohlenstoff und Kieselgurpartikel in einem Gesamtanteil von 28 Gew.-% bis 65 Gew.-% gebildet sind, wobei die reibungsmodifizierenden Partikel und Fasern mit dem Harz oder der Harzmischung vermischt sind, sowie ein Reibelement umfassend ein Trägerelement, das auf zumindest einer seiner Oberflächen einen Reibbelag aufweist.
Nichtmetallische Reibbeläge für nasslaufende Synchronisierungen und Kupplungen werden in der Regel aus einem Fasermaterial, Füllstoffen und einem Bindemittel hergestellt. Das üblicherweise eingesetzte Fasermaterial besteht beispielsweise aus einer Kohlefaser, Aramidfaser, Phenolharzfaser, Wolastonitfaser oder Keramikfaser, oder einem Fasergemisch. Die Fasern werden gewoben oder als Vlies oder Filz eingesetzt und sind nach deren Tränkung mit dem Bindemittelharz als nasslaufende Reibbeläge einsetzbar. Die verwendete Faser hat generell einen sehr hohen Einfluss auf die tribologischen Eigenschaften des Reibbelages und ist in den meisten Fällen die kostenintensivste Komponente des Reibbelages.
Die EP 1 750 031 A2 beschreibt ein Verfahren zur Herstellung eines Reibelementes, nach dem auf ein Trägerelement ein Reibbelag aufgebracht wird, wobei der Reibbelag ein Harz, reibungsmodifizierende Partikel und Fasern aufweist. Die Partikel und Fasern werden mit dem Harz vor dem Aufbringen auf das Trägerelement vermischt.
Aus der EP 1 413 793 A2 ist ein Reibbelag bekannt umfassend ein Harz, reibungsmodifizierende Partikel und Fasern, wobei der Anteil des Harzes zwischen 5 Gew.-% und 80 Gew.-% beträgt und der Rest aus den reibungsmodifizierenden Partikel und Fasern besteht. Die reibungsmodifizierenden Partikel werden durch eine Mischung aus Kohlenstoff und silikatischen Partikel, wie Celit oder Diatomeenerde, gebildet.

Die Aufgabe vorliegender Erfindung bestand darin, einen nichtmetallischen Reibbelag zu schaffen, der zumindest annähernd die tribologischen Eigenschaften eines Karbonreibbelages aufweist, aber in seiner Herstellung kostengünstiger ist.

Diese Aufgabe wird mit dem eingangs genannten Reibbelag gelöst, bei dem die Kieselgurpartikel durch Kieselgur mit Wabenstruktur und Kieselgur mit knolliger Struktur gebildet sind, sowie durch ein Reibelement, das mit diesem Reibbelag versehen ist.

Unter dem Begriff "homogene Verteilung" wird im Sinne der Erfindung die übliche technische Bedeutung dieses Begriffes verstanden, wobei lokale, herstellungsbedingte Konzentrationsunterschiede im Ausmaß von ± 5 Gew.-% zulässig sind, d.h. dass über den gesamten Reibbelag gesehen die Konzentration der der Partikel und/oder Fasern um maximal ± 5 Gew.-% von einem Mittelwert der Konzentration, der dem jeweiligen zugesetzten Anteil entspricht, abweicht.

Von Vorteil ist, dass durch die Einmischung der Fasern und/oder Partikel in das Harz der Anteil an diesen Bestandteilen des Reibbelages reduziert werden kann, wobei durch die homogene Verteilung im Harz gleichmäßig tribologische Eigenschaften über die gesamte Standzeit des Reibbelages erreicht werden können. Es kann dadurch auch der Harzanteil des Reibbelages erhöht werden, wodurch die Festigkeit des Reibbelages verbessert wird, gleichzeitig aber durch die eingelagerten Fasern und Partikel eine gewisse Anpassbarkeit an die harte Gegenlamelle einer Synchronisation erhalten bleibt. Im Vergleich mit Reibbelägen, bei denen die reibungsmodifizierenden Partikel auf das Harz aufgestreut werden - wodurch der Nachteil besteht, dass nach Verlust zumindest eines Teils dieser Partikel der Belag bzw. das Reibelement ausgetauscht werden muss - ist der Anteil an reibungsmodifizierenden Partikel und Fasern im Reibbelag selbst höher, wodurch eine zusätzliche Matrixverfestigung des Harze erreicht wird. Durch die Einmischung der Partikel und/oder Fasern in das Harz bevor dieses auf das Trägerelement aufgebracht wird, ist es zudem möglich, größere Schichtdicken des Reibbelages einfacher herzustellen. Durch den Einsatz von Celit (Kieselgur mit Wabenstruktur) und Diatomeenerde (Kieselgur mit knolliger Struktur) kann einerseits das spezifische Gewicht des Reibbelages verringert werden, andererseits kann damit auch die Ölaufnahmefähigkeit des Reibbelages verbessert werden, da diese Substanzen eine ausgeprägte Porenstruktur aufweisen.

Die Mischung aus den reibungsmodifizierenden Partikel und/oder Fasern mit dem zumindest einen Harz kann bei einer Viskosität des Harzes ausgewählt aus einem Bereich mit einer unteren Grenze von 1000 cPs und einer oberen Grenze von 5000 cPs, jeweils bei einer Temperatur von 20 °C, aufgebracht werden. Es wird damit eine weitere Vergleichmäßigung des Eigenschaftsprofils des Reibbelages erreicht. Wird die Harzmischung mit einer Harzviskosität oberhalb von 5000 cPs auf das Trägerelement aufgebracht, ist es einerseits schwieriger die homogene Verteilung aufrecht zu erhalten, da schwerere Bestandteile dieser Mischung absinken können. Andererseits wurde beobachtet, dass die Porosität des Reibbelages, und damit auch dessen tribologische Eigenschaften verringert bzw. verschlechtert werden. Bei einer Harzviskosität unterhalb von 1000 cPs wurde beobachtet, dass insbesondere bei höheren Feststoffgehalten im Harz die Haftung auf dem Trägerelement verschlechtert wird.

Es kann weiter vorgesehen sein, dass die Mischung aus den reibungsmodifizierenden Partikel und/oder Fasern mit dem zumindest einen Harz vor dem Auftragen auf eine Faserschicht aufgebracht wird. Einerseits kann über diese Faserschicht die Kompressibilität des mit dem Reibbelag versehenen Reibelementes und damit die Anpassungsfähigkeit des Reibbelages an die Gegenlamelle verbessert werden, und andererseits kann damit die Herstellung des Reibelementes vereinfacht werden, indem Halbfertigfabrikate aus der Mischung des Harzes mit den Partikeln und/oder Fasern großflächiger hergestellt und an den jeweiligen Anwendungsfall angepasst zugeschnitten werden.

Als Faserschicht wird insbesondere ein Faservlies verwendet, da im Vergleich zu gewebten Faserschichten, die zwar prinzipiell im Rahmen der Erfindung ebenfalls eingesetzt werden können, die Harzdurchdringung und damit auch die Einlagerung der Partikel und/oder Fasern in die Faserschicht über das Harz besser ist, sodass die Faserschicht selbst auch eine im Vergleich zu gewebten Materialien höhere Steifigkeit bei gleichzeitiger Kompressibilität aufweist.

Prinzipiell können verschiedenste Fasern, wie z.B. Baumwollfasern, etc. verwendet werden, allerdings wird für die bevorzugte Ausführung ein Faservlies aus synthetischen Fasern verwendet, insbesondere ein Faservlies aus Acrylfasern und/oder Aramidfasern. Es kann damit ein Reibbelag hergestellt werden, der einerseits eine hohe Ölaufnahmefähigkeit aufweist, aus dem aber andererseits das aufgenommene Öl während des Reibschlusses mit einem weiteren Reibelement, also beispielsweise einer Gegenlamelle, wieder leichter ausgequetscht wird. Zudem weist der Reibbelag insbesondere mit den genannten Fasern eine verbesserte mechanische und thermische Belastbarkeit auf.

Dabei hat es sich zur Verbesserung dieser Eigenschaften als vorteilhaft erwiesen, wenn ein Faservlies verwendet wird, das aus Fasern mit einer Länge ausgewählt aus einem Bereich mit einer unteren Grenze von 100 µm und einer oberen Grenze von 100 mm besteht, da mit Fasern unterhalb von 100 µm das Hohlraumvolumen der nicht getränkten Faserschicht abnimmt und damit dieser Faserschicht kompakter wird, und mit Fasern oberhalb von 100 mm genau der umgekehrte Effekt eintritt, wodurch die tribologischen Eigenschaften des Reibbelages verschlechtert werden. Zudem verschlechtert sich die Handhabbarkeit einer Faserschicht mit Fasern mit einer Länge über 100 mm, da diese Faserschicht nur mehr einen sehr losen Zusammenhalt der Fasern aufweist.

Die der Mischung aus dem Harz und den reibungsmodifizierenden Partikeln und Fasern zugesetzten Fasern weisen bevorzugt eine Länge auf, die ausgewählt ist aus einem Bereich mit einer unteren Grenze von 20 µm und einer oberen Grenze von 400 µm. Es wird damit eine Verbesserung der Ausgewogenheit der Eigenschaften des Reibbelages erreicht, da zwar einerseits mit längeren Fasern als 400 µm zwar eine bessere Matrixverfestigung des Harzes erzielt werden kann, aber darunter die Homogenität der Verteilung der Fasern in dem Harz bzw. der Harzschicht leidet. Andererseits wird bei Verwendung von Fasern mit einer Faserlänge von kleiner als 20 µm die Ölbenetzbarkeit und auch die Matrixverfestigung verschlechtert, da diese Fasern nur mehr sehr lokal im Reibbelag wirken.

Die reibungsmodifizierenden Partikel weisen vorzugsweise einen maximalen Durchmesser zwischen 0,1 µm und 80 µm auf. Unter maximalen Durchmesser wird dabei der jeweils größte Durchmesser eines Partikels unabhängig von der Raumrichtung verstanden. Es wird damit die Zerrüttungsfestigkeit des Reibbelages verbessert, indem vermieden wird, insbesondere im Zusammenhang mit der homogenen Verteilung dieser Partikel in dem Harz, dass zwischen diesen Partikeln eine zu geringe Harzmenge vorhanden ist. Mit anderen Worten wird damit das "Füllvolumen" der Zwischenräume zwischen den Partikeln bei dem eingesetzten Menganteil an Partikeln verbessert.

Die Mischung aus den reibungsmodifizierenden Partikel und/oder Fasern mit dem Harz kann gemäß einer Ausführungsvariante auf eine Harzschicht aufgetragen sein, die vor dem Auftragen der Mischung aus den reibungsmodifizierenden Partikel und/oder Fasern mit dem Harz auf das Trägerelement aufgebracht worden ist, wodurch die Haftfestigkeit des Reibbelages auf dem Trägerelement verbessert werden kann, insbesondere für den Fall, dass reibungsmodifizierende Partikel über die Oberfläche des Harzes vorragen. Durch die Anordnung einer zusätzlichen Harzschicht können diese Partikel in diese Harzschicht eingedrückt werden, sodass an der Grenzfläche Reibbelag/Trägerelement eine zumindest vollständig durchgehende Harzschicht ausgebildet ist.

Gemäß einer Ausführungsvariante des Reibbelages ist vorgesehen, dass der Kohlenstoff eine Mischung aus Graphit, pyrolytischer Kohle und aktiviertem Kohlenstoff ist. Es kann damit die Trockenschmierung und das Reibwertverhalten bzw. die Reibcharakteristik besser eingestellt werden. Aus diesen Gründen beträgt bevorzugt dabei der Anteil an Graphit zwischen 10 Gew.-% und 30 Gew.-% und/oder der Anteil an pyrolytischer Kohle zwischen 15 Gew.-% und 35 Gew.-% und/oder der Anteil an aktiviertem Kohlenstoff zwischen 5 Gew.-% und 15 Gew.-%.

In Hinblick auf die Ölaufnahmefähigkeit und das Ölausquetschverhalten des Reibbelages ist es von Vorteil, wenn der Anteil an Celit bevorzugt zwischen 2 Gew.-% und 7 Gew.-% beträgt, jener an Diatomeenerde bevorzugt zwischen 5 Gew.-% und 15 Gew.-%.

Nach einer weiteren Ausführungsvariante ist vorgesehen, dass im Reibbelag Hartstoffe, d.h. Hartpartikel, in einem Anteil zwischen 2 Gew.-% und 8 Gew.-% enthalten sind. Es wird damit eine zusätzliche Verstärkung der Harzmatrix erreicht, wodurch die Verschleißbeständigkeit des Reibbelages verbessert werden kann. Bei einem Anteil unter 2 Gew.-% ist der Verstärkungseffekt zu gering, da pro Flächeneinheit des Reibbelages zu wenige Partikel vorhanden sind. Mit einem Anteil von mehr als 8 Gew.-% wird hingegen die Festigkeit des Reibbelages so groß, dass das Kompressibilitätsverhalten darunter leidet.

Die Hartstoffe sind bevorzugt ausgewählt sind aus einer Gruppe bestehend aus oder umfassend ZrSiO4, SiC, SiO2, Al₂O₃, Silikate, insbesondere Inselsilikate, da mit diesen Hartstoffen aufgrund deren Härte der Anteil an Hartstoffen im Reibbelag reduziert werden kann und damit die Kompressibilität des Reibbelages verbessert werden kann.

Aus den zu den reibungsmodifizierenden Partikeln ausgeführten Gründen weisen die Hartpartikel vorzugsweise eine durchschnittliche Partikelgröße zwischen 0,1 µm und 80 µm auf. Der Reibbelag kann mit dem Trägerelement direkt oder, wie voranstehend ausgeführt, über eine weitere Harzschicht verbunden sein.

Zum besseren Verständnis der Erfindung wird diese anhand der nachfolgenden Figuren näher erläutert.

Es zeigen jeweils in schematisch vereinfachter Darstellung:
- Fig. 1: einen Ausschnitt aus einem Reibelement im Querschnitt;
- Fig. 2: einen Ausschnitt aus einem Reibelement einer Ausführungsvariante im Querschnitt;
- Fig. 3: einen Ausschnitt aus einem Reibelement einer anderen Ausführungsvariante im Querschnitt;
- Fig. 4: die Abriebbeständigkeit verschiedener Reibbeläge;
- Fig. 5: ein Diagramm zum Verhalten des Reibwertes der Reibbeläge nach Fig. 4 über die Laufzeit;
- Fig. 6: die grafische Darstellung der Herstellungskosten der Reibbeläge nach Fig. 4.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

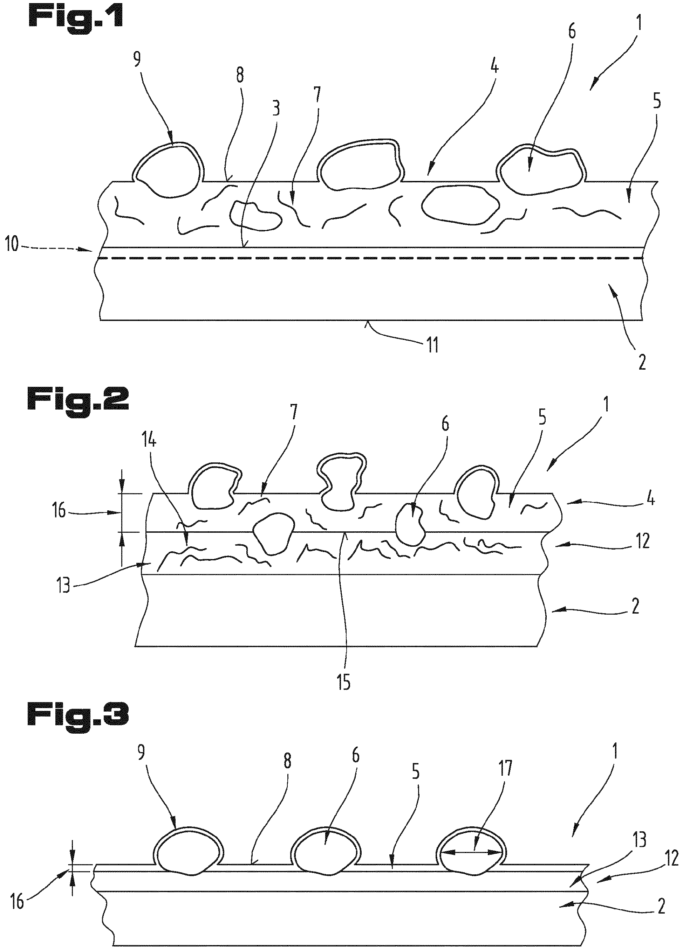

Fig. 1 zeigt ausschnittsweise einen Querschnitt durch eine erste Ausführungsvariante eines Reibelementes 1. Diese Reibelement 1 besteht aus einem Trägerelement 2, das auf einer Oberfläche 3 einen Reibbelag 4 aufweist. Der Reibbelag 4 umfasst ein Harz 5 oder eine Harzmischung, das die Matrix des Reibbelages 4 bildet. In dem Harz 5 sind reibungsmodifizierende Partikel 6 und Fasern 7 eingebettet, insbesondere homogen (entsprechend voranstehenden Ausführungen) darin verteilt. Ein Teil der reibungsmodifizierende Partikel 6 ist über eine Reibbelagsoberfläche 8 vorragend angeordnet, wobei auch diese Partikel 6 von einer Harzschicht 9 aus dem Harz 5 umgeben sind. Mit anderen Worten ausgedrückt sind sämtlich Partikel 6 und Fasern 7 in das Harz 5 zumindest annähernd vollständig eingebettet.

Wie strichliert in Fig. 1 angedeutet, kann der Reibbelag 4 über eine Kleberschicht 10 mit dem Trägerelement 2 verbunden sein. Es besteht aber auch die Möglichkeit, dass die Verbindung des Reibbelages 4 mit dem Trägerelement 2 direkt über das Harz 5 erfolgt.

Obwohl bei dieser und auch bei sämtlichen weiteren Ausführungsvarianten die Beschichtung nur einer Oberfläche 3 des Trägerelementes 2 mit dem Reibbelag 4 dargestellt ist, besteht auch die Möglichkeit, dass eine weitere, dieser Oberfläche 3 gegenüberliegende Oberfläche 11 mit einem Reibbelag 4 versehen ist.

Fig. 2 zeigt ausschnittsweise einen Querschnitt durch eine andere Ausführungsvariante des Reibelementes 1. Dieses umfasst wiederum den Reibbelag 4 mit dem Harz 5 oder der Harzmischung, den darin enthaltenen reibungsmodifizierenden Partikeln 6 und den Fasern 7, der auf dem Trägerelement 2 angeordnet ist.

Zum Unterschied zu voranstehender Ausführungsvariante ist allerdings zwischen der Schicht aus dem Harz 5 mit den Partikeln 6 und/oder Fasern 7 und dem Trägerelement 2 eine Zwischenschicht 12 angeordnet, die mit den beiden Schichten verbunden ist. Diese Zwischenschicht 12 ist bevorzugt eine Faserschicht 13 mit Fasern 14, insbesondere eine Vliesschicht, wobei jegliche Art von Vliesen, also beispielsweise sowohl gelegte als auch Wirrlagervliese, verwendet werden kann.

Diese Faserschicht 13 kann zumindest teilweise mit einem Harz oder Harzgemisch, insbesondere dem Harz 5 der Schicht mit den reibungsmodifizierenden Partikeln 6 und Fasern 7, infiltriert sein. Bei Verwendung von zwei unterschiedlichen Harzen für die beiden Schichten, ist selbstverständlich auf die Materialverträglichkeit in Hinblick auf die Auswahl der Harze zu achten.

Die Zwischenschicht 12 kann aber auch eine reine Harzschicht sein, die insbesondere als Haftvermittler dient, wobei auch in diesem Fall wiederum gleiche oder unterschiedliche Harze für die beiden Schichten verwendet werden können.

Die Zwischenschicht 12 kann weiters den Zweck erfüllen, dass über eine untere Reibbelagsoberfläche 15 vorragende Partikel 6 in diese Zwischenschicht 12 während der Herstellung des Reibelementes 1 eingedrückt werden, um einen direkten Kontakt mit dem Trägerelement 2 zu vermeiden, und um zu vermeiden, dass die Homogenität der Verteilung der Partikel 6 in dem Harz 5 durch das Wegdrücken dieser Partikel 6 in Richtung auf die äußere Reibbelagsoberfläche 8 bei Zusammenfügen der Schichten des Reibelementes 1 verringert wird.

Bei diesen beiden Ausführungsvarianten des Reibelementes ist eine Schichtdicke 16 des Reibbelages 4 relativ groß, insbesondere im Bereich zwischen 500 um und 1000 µm, sodass also Anteile der Partikel 6 vollständig in das Harz 5 eingebettet werden können, ohne über die Reibbelagsoberfläche 8 vorzuragen.

Zum Unterschied dazu zeigt Fig. 3 eine Ausführungsvariante des Reibelementes 1 bei der die Schichtdicke 16 der Harzschicht in der Schicht aus dem Harz 5 und den reibungsmodifizierenden Partikeln 6 - obwohl nicht dargestellt sind auch bei dieser Ausführungsform des Reibelementes 1 die Fasern 7 in dem Harz 5 enthalten - kleiner ist, als ein maximaler Durchmesser 17 (entsprechend voranstehenden Ausführungen zum maximalen Durchmesser) der Partikel 6, insbesondere zwischen 100 µm und 500 µm betragen kann. Aus den voranstehenden Gründen ist wiederum die Zwischenschicht 12, insbesondere die Faserschicht 13 zwischen der Schicht aus dem Harz 5 mit den Partikeln 6 und dem Trägerelement 2 angeordnet und mit diesen verbunden. Auch bei dieser Ausführungsvariante sind die über die Reibbelagsoberfläche 8 teilweise vorragenden Partikel 6 mit der Harzschicht 9 aus dem Harz 5 umgeben, insbesondere vollständig.

Das Reibelement 1 ist für so genannte nasslaufende Anwendungen, also Anwendungen bei denen der Reibbelag 4 mit einem Schmier- und Kühlmittel, beispielsweise einem, insbesondere synthetischen, Öl, benetzt wird. Prinzipiell sind derartige Reiblamellen aus dem Stand der Technik mit unterschiedlichsten geometrischen Formen, die sich nach dem jeweiligen Anwendungsfall richten, bekannt. Da dies dem Fachmann bekannt ist, sei dazu an die einschlägige Literatur verwiesen.

Die Reibelemente 1, also beispielsweise Reiblamellen, werden beispielsweise für Einfach- und Mehrfach-Synchronisationen, ungeregelte und geregelte Verteilergetriebe, Bremsen, Kupplungen, Differenzialsperren, Torque Vectoring Anwendungen, etc. verwendet. Dazu wird das Reibelement 1 mit einem weiteren Reibelement so angeordnet, dass während der Betätigung der jeweiligen Vorrichtung das Reibelement 1 mit dem weiteren Reibelement in Reibschluss gelangt. Die Anzahl der Reibelemente 1 und der weiteren Reibelemente - die gegebenenfalls auch durch die Reibelemente 1 gebildet sein können, normalerweise aber stofflich anders ausgeführt sind als die Reibelemente 1 - ist dabei nicht auf zwei beschränkt, sondern richtet sich nach der Reibleistung, die gewünscht ist. Beispielsweise können pro Paket drei, vier, fünf, sechs, sieben, acht, neun, zehn bis zwanzig, etc. Reibelemente miteinander kombiniert zu einer Reibbaugruppe, also beispielsweise einem so genannten Lamellenpaket, kombiniert sein.

Unter Torque Vectoring Anwendungen versteht man bspw. Anwendungen in der Fahrdynamik bei denen bspw. Drehzahlunterschiede eines Sperrdifferenzials durch dieses System vergrößert werden. Man kann damit bspw. die Lenkung eines Fahrzeuges unterstützen, in dem die Antriebsmomente ungleich auf die Räder verteilt werden. Dadurch kann ein höheres Moment zum kurvenäußeren Rad gelenkt werden, sodass bei normalen Fahrbedingungen ein übersteuerndes Verhalten eingestellt werden kann.

In der bevorzugten Form der Erfindung wird das Reibelement 1 in Einfach- und Mehrfach-Synchronisationen sowie in Kupplungen eingesetzt.

Für die Herstellung des Reibelementes 1 wird in einem ersten Schritt das Trägerelement 2 bereitgestellt. Dieses kann entweder aus einem Vollmaterial oder aus einem Sinterwerkstoff bestehen, wobei in ersterem Fall das Trägerelement 2 aus einem entsprechenden Rohmaterial geschnitten oder gestanzt wird, wobei auch ein Gussverfahren prinzipiell möglich ist. Insbesondere besteht das Trägerelement 2 aus einem Stahl, aus Aluminium bzw. einer Aluminiumlegierung, aus einer Kupferlegierung, wie z.B. Messing oder Bronze, etc. Prinzipiell sind sämtliche aus dem Stand der Technik bekannten Werkstoffe für derartige Trägerelemente 2 einsetzbar.

In einem weiteren Schritt wird die Mischung aus dem Harz 5 und den reibungsmodifizierenden Partikeln 6 und Fasern 7 hergestellt, bevor diese auf das Trägerelement 2 aufgebracht wird. Dazu können die reibungsmodifizierenden Partikel 6 und Fasern 7 in das schmelzflüssige Harz eingemischt und darin homogenisiert werden, beispielsweise mit Hilfe einer Mischstrecke mit einer Mischschnecke.

Für den Fall, dass eine Harzmischung verwendet wird, können die Harze vorher oder mit den Partikeln 6 und Fasern 7 vermischt werden.

Diese Mischung kann anschließend direkt auf die Oberfläche 3 des Trägerelementes 1 aufgebracht, getrocknet, gegebenenfalls gepresst, und gehärtet, eventuell unter Zwischenschaltung eines Vorhärtungsschrittes werden. Die dabei angewandten Trocknungs- und Härtungstemperaturen richten sich nach dem jeweiligen Harz. Beispielsweise kann die Trocknungstemperatur zwischen 60 °C und 120 °C, die Härtungstemperatur zwischen 160 °C und 350 °C und die Vorhärtungstemperatur zwischen 120 °C und 180 °C betragen. Der Pressschritt kann beispielsweise bei einem Druck zwischen 5 kN/m² und 20 kN/m² durchgeführt werden, insbesondere bei einer Temperatur des Harzes 5 zwischen 60 °C und 150 °C. Gegebenenfalls, kann wie voranstehend ausgeführt die Kleberschicht 10 vor dem Auftragen der Mischung mit dem Harz 5 auf dem Trägerelement 1 angebracht werden. Als Kleber können beispielsweise Kleber auf Phenol- oder Epoxy- oder Polyamidimidbasis verwendet werden.

Andererseits besteht die Möglichkeit, dass die Mischung aus dem Harz 5, den Partikeln 6 und den Fasern 7 sowie gegebenenfalls weiteren Zusatzstoffen, wie dies nachstehend noch ausgeführt wird - generell können diese Zusatzstoffe bei sämtlichen Ausführungsvarianten des Reibelementes 1 bzw. Reibbelages 4 dem Harz 5 zugesetzt sein - nach dem Mischprozess kalandriert und danach wieder getrocknet, gepresst und gehärtet, gegebenenfalls vorgehärtet, werden, um damit ein flächiges Halbfertigprodukt zu erhalten, dass dann entsprechend zugeschnitten auf dem Trägerelement 2 angeordnet und mit diesem verbunden werden kann.

Es besteht aber auch die Möglichkeit, dass die Partikel 6 und Fasern 7 mit dem Harz 5 oder der Harzmischung beschichtet werden, beispielsweise mit einem Sprühverfahren. Diese Methode wird insbesondere für die Herstellung eines Reibelementes nach Fig. 3 angewandt. Es entsteht dabei ein "Granulat", das auf eine Harzschicht, die vorher auf das Trägerelement 2 aufgebracht wurde und vornehmlich als Bindeschicht dient, aufgestreut werden kann. Nach dem Aufstreuen kann der Reibbelag 4 wiederum gepresst und gehärtet werden, wie dies voranstehend ausgeführt ist.

Bei sämtlichen Verfahrensvarianten besteht die Möglichkeit, dass die Mischung aus dem Harz 5, den Partikeln 6 und den Fasern 7 vor dem Auftragen auf das Trägerelement 2 auf Faserschicht 13 aufgebracht wird, sodass diese Faserschicht 13 im fertigen Reibelement 1 zwischen der Harzschicht und dem Trägerelement 2 angeordnet ist, wobei die Faserschicht 13 zumindest teilweise mit der Mischung aus dem Harz 5, den Partikeln 6 und Fasern 7 getränkt ist und/oder mit dem Harz, das gegebenenfalls zwischen dem Reibbelag 4 und dem Trägerelement 2 aufgebracht wird, wie dies voranstehend ausgeführt wurde.

Es wird also bei sämtlichen Ausführungsvarianten des Verfahrens zur Herstellung des Reibelementes 1 eine pastöse Mischung aus dem Harz 5 oder der Harzmischung und den reibungsmodifizierenden Partikeln 6 und den Fasern 7 sowie gegebenenfalls den weiteren Zusatzstoffen hergestellt, die in der Folge zum Reibbelag 4 bzw. zum fertigen Reibelement 1 weiterverarbeitet wird. Vorzugsweise wird diese pastöse Mischung bei einer Viskosität des Harzes ausgewählt aus einem Bereich mit einer unteren Grenze von 1000 cPs, insbesondere von 1500 cPs, und einer oberen Grenze von 5000 cPs, insbesondere von 3500 cPs, jeweils betrachtet bei einer Temperatur von 20 °C, aufgebracht. Die Viskosität kann dabei einerseits über die Temperatur eingestellt werden, andererseits auch über den Anteil und die Art der Partikel 6 und Fasern 7 sowie gegebenenfalls weiteren Zusatzstoffen. Es ist auch möglich dieser Mischung Viskositätsregler zuzusetzen, beispielsweise alkoxylierte Alkohole, wobei deren Anteil an der gesamten Mischung zwischen 1 Gew.-% und 10 Gew.-% betragen kann.

Als reibungsmodifizierende Partikel 6 werden Kohlenstoff, Celit, und Diatomeenerde verwendet, wobei der Kohlenstoff auch in Form von Kohlenstoff-Nanotubes vorliegen kann. Unter reibungsmodifizierend wird dabei verstanden, dass diese Partikel u.a. zur Erhöhung der Reibzahl, zur Reibwertstabilität,zur Erhöhung der Haftung von Öladditiven auf die Oberfläche des Belags, etc, verwendet werden.

Als Fasern 7 können außer Papierfasern beliebige Fasern 7 verwendet werden, beispielsweise Baumwollfasern. Vorzugsweise werden allerdings synthetische Fasern 7 verwendet, insbesondere Acrylfasern, Carbonfasern, Nitrilfasern, Glasfasern oder Aramidfasern. Es können auch Mischungen aus unterschiedlichen Faserwerkstoffen verwendet werden, beispielsweise eine Mischung aus Acryl- und Aramidfasern.

Der Gesamtanteil an reibungsmodifizierenden Partikeln 6 und Fasern 7 - ohne die Fasern 14 der gegebenenfalls vorhandenen Faserschicht 13 - an dem Reibbelag 4 ist ausgewählt aus einem Bereich mit einer unteren Grenze von 30 Gew.-%, insbesondere 40 Gew.-%, und einer oberen Grenze von 80 Gew.-%, insbesondere 70 Gew.-%. Der Gesamtanteil des Harzes 5 - ohne die gegebenenfalls vorhandene weitere Harzschicht - am Reibbelag 4 ist ausgewählt aus einem Bereich mit einer unteren Grenze von 20 Gew.-%, insbesondere 30 Gew.-%, und einer oberen Grenze von 70 Gew.-%, insbesondere 60 Gew.-%.

In der Mischung aus reibungsmodifizierenden Partikeln 6 und Fasern 7, ist der Anteil an reibungsmodifizierenden Partikeln 6 ausgewählt aus einem Bereich mit einer unteren Grenze von 28 Gew.-% und einer oberen Grenze von 65 Gew.-%, insbesondere 60 Gew.-% und der Anteil an Fasern 7 ausgewählt aus einem Bereich mit einer unteren Grenze von 2 Gew.-%, insbesondere 5 Gew.-%, und einer oberen Grenze von 15 Gew.-%, insbesondere 10 Gew.-%.

Als reibungsmodifizierende Partikel 6 wird eine Mischung aus Kohlenstoff, Celit und Diatomeenerde in einem Gesamtanteil von 28 Gew.-% bis 65 Gew.-% eingesetzt. Als Kohlenstoff kann Graphit, pyrolytische Kohle, aktivierter Kohlenstoff, mit Grafit kalziniertes Kieselgur, verwendet werden.

Vorzugsweise besteht der Kohlenstoffanteil der Mischung aus Graphit, pyrolytische Kohle und aktiviertem Kohlenstoff, wobei besonders bevorzugt der Anteil an Graphit am Reibbelag 4 zwischen 10 Gew.-%, insbesondere 15 Gew.-%, und 30 Gew.-%, insbesondere 25 Gew.-%, und/oder der Anteil an pyrolytischer Kohle am Reibbelag 4 zwischen 15 Gew.-%, insbesondere 18,5 Gew.-%, und 35 Gew.-%, insbesondere 28 Gew.-%, und/oder der Anteil an aktiviertem Kohlenstoff am Reibbelag 4 zwischen 5 Gew.-%, insbesondere 7 Gew.-%, und 15 Gew.-%, insbesondere 12 Gew.-%, beträgt.

Vorzugsweise wird ein Mengenverhältnis an Graphit zu pyrolytischer Kohle zu aktiviertem Kohlenstoff zwischen 1 : 2 : 0,3 und 1 : 1 : 0,5 eingesetzt.

Der Anteil an Celit am Reibbelag 4 beträgt zwischen 2 Gew.-%, insbesondere 3 Gew.-%, und 7 Gew.-%, insbesondere 6 Gew.-%.

Der Anteil an Diatomeenerde am Reibbelag 4 beträgt zwischen 5 Gew.-%, insbesondere 7 Gew.-%, und 15 Gew.-%, insbesondere 10 Gew.-%. Bevorzugt wird die Diatomeenerde vor deren Verwendung kalziniert, um dabei den Anteil an organischer Substanz zu reduzieren.

Bevorzugt wird ein Mengenverhältnis von Diatomeenerde zu Celit zwischen 0,5 : 1 und 1 : 1.

Bei sämtlichen Ausführungsvarianten wird als Harz 5 oder Harzgemisch bevorzugt ein Harz verwendet, dass ausgewählt ist aus einer Gruppe umfassend oder bestehend aus Phenolharzen, Melaminharzen, Amidharzen, Amid-Imid-harzen, Epoxidharzen, Silikonharze.

Der Reibbelag 4 kann weiters Hartpartikel in einem Anteil zwischen 2 Gew.-% und 8 Gew.-% enthalten. Vorzugsweise sind diese Hartpartikel ausgewählt sind aus einer Gruppe bestehend aus oder umfassend ZrSiO₄, SiC, SiO₂, Al₂O₃, bzw. generell Silikate, insbesondere Inselsilikate.

Sowohl die reibungsmodifizierenden Partikel 6 als auch die Hartpartikel weisen bevorzugt eine maximale Partikelgröße zwischen 0,1 µm, insbesondere 10µm, und 80 µm, insbesondere 60 um, auf.

Das Faservlies 13 besteht vorzugsweise ebenso wie die Fasern 7 im Harz 5 aus synthetischen Fasern. Sowohl für die Fasern 7 im Harz 5 als auch für die Fasern 14 der Faserschicht 13 können Fasern mit einer Länge ausgewählt aus einem Bereich mit einer unteren Grenze von 100 µm, insbesondere 200 µm, und einer oberen Grenze von 100 mm, insbesondere 50 mm, verwendet werden, wobei die Fasern 7, die dem Harz 5 zugemischt werden, vorzugsweise eine Länge aufweisen zwischen 20 µm und 400 µm.

Mit dem Reibbelag 4 kann ein Reibelement 1 hergestellt werden, das eine Reduktion des Reibbelagverschleißes im Einsatz in nasslaufenden Synchronisierungen aufweist

Im Tabelle 1 sind zum besseren Verständnis des Reibbelages 4 einige Beispiele angegeben.

**Tabelle 1: Beispielzusammensetzungen:**

| | Beispiel 1 [Gew.-%] | Beispiel 2 [Gew.-%] | Beispiel 3 [Gew.-%] |
|---|---|---|---|
| Graphit | 15 | 17 | 15 |
| Pyrolytische Kohle | 18 | 15 | 20 |
| Celit | 5 | 7 Grade B | 3 Grade A |
| Diatomenerde | 3 | | 3 |
| ZrSiO₄ | | 3 | |
| Aktivierter Kohlenstoff | 5 | 6 | 5 |
| Al₂O₃ | 6 | 5 | 5 |
| Latex | 7 | 7 | 8 |
| ZrO₂ | 8 | 7 | 8 |
| Phenolharz | 25 | 27 | 23 |
| Epoxyharz | 8 | 6 | 10 |

Zum Vergleich wurden zwei Reibbeläge entsprechend dem Stand der Technik hergestellt. Dabei wies Belag A die Zusammensetzung 40 % Carbonfasern, 10% Aramidfasern, 10% Füllstoffe, 40% Harz und Belag B die Zusammensetzung Carbongewebe bestehend aus 70% Carbonfasern und 30% Harz auf.

Der Reibbelag 4 nach Beispiel 1, sowie die Reibbeläge A und B wurden jeweils auf einer Stahllamelle befestigt. In weiterer Folge wurde von diesen Reibelementen die Abriebbeständigkeit und das Verhalten des Reibwertes getestet. Die Prüfungen wurden unter den folgenden Prüfbedingungen durchgeführt: p spez.[N/mm²] 3-9, v [m/s] 3 - 10, Schwungmasse: 0,06 kgm².

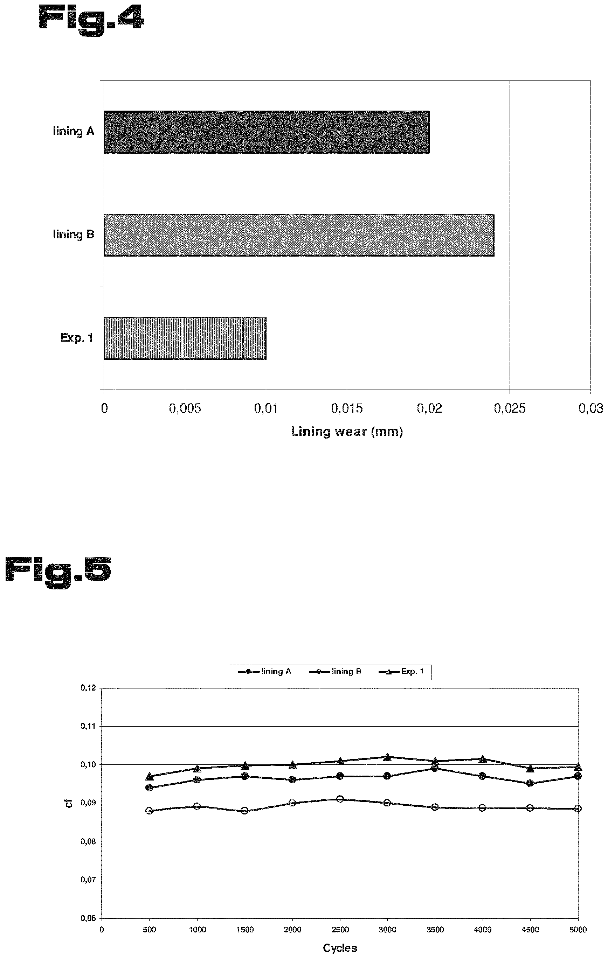

Es wurde jeweils eine Stahlgegenlamelle verwendet. Die Ergebnisse sind in den Fig. 4 und 5 dargestellt. In Fig. 4 ist dabei auf der Abszisse der Abrieb in [mm] aufgetragen. Wie deutlich zu erkennen ist, weist der erfindungsgemäße Reibbelag 4 (unterer Balken) unter gleichen Bedingungen einen um 50 % geringeren Abrieb auf, als der Reibbelag A (oberer Balken) und einen noch deutlich geringeren Abrieb als der Reibbelag B (mittlerer Balken) nach dem Stand der Technik.

Fig. 5 zeigt das Reibverhalten des Reibbelages 4 nach Beispiel 1 in Tabelle 1, sowie der Reibbeläge A und B über die Zeit, d.h. die Anzahl der Schaltzyklen, die auf der Abszisse aufgetragen sind. Auf der Ordinate ist der Reibungskoeffizient cf aufgetragen. Es ist deutlich ersichtlich, dass der erfindungsgemäße Reibbelag 4 (Dreiecke) einerseits einen höheren Reibungskoeffizienten im Vergleich zu den Reibbelägen A (volle Kreise) und B (leere Kreise) aufweist, und dass andererseits der Reibungskoeffizient über die Zeit nur geringfügig schwankt, sodass auch nach 5000 Schaltzyklen der erfindungsgemäße Reibbelag 4 noch den höheren Reibwert aufweist.

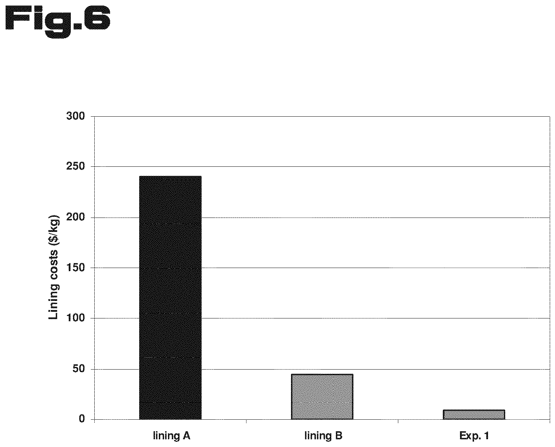

Der Vollständigkeit halber zeigt Fig. 6 ein Balkendiagramm zu den Kosten der Reibbelage, wobei auf der Abszisse der Reibbelag 4 (rechter Balken) und die Reibbeläge A (linker Balken) und B (mittlerer Balken) dargestellt sind, und auf der Ordinate die Kosten in [$/kg]. Es ist deutlich zu sehen, dass der erfindungsgemäße Reibbelag 4 die mit Abstand geringsten Kosten in der Herstellung verursacht.

Der Ordnung halber sei abschließend darauf hingewiesen, dass zum besseren Verständnis des Aufbaus des Reibelementes 1 dieses bzw. dessen Bestandteile teilweise unmaßstäblich und/oder vergrößert und/oder verkleinert dargestellt wurden.

### Bezugszeichenaufstellung

- 1: Reibelement
- 2: Trägerelement
- 3: Oberfläche
- 4: Reibbelag
- 5: Harz
- 6: Partikel
- 7: Faser
- 8: Reibbelagsoberfläche
- 9: Harzschicht
- 10: Kleberschicht
- 11: Oberfläche
- 12: Zwischenschicht
- 13: Faserschicht
- 14: Faser
- 15: Reibbelagsoberfläche
- 16: Schichtdicke
- 17: Durchmesser

## Patentansprüche

1. Reibbelag (4) umfassend oder bestehend aus ein(em) Harz (5) oder eine(r) Harzmischung, das oder die die Matrix des Reibbelages (4) bildet, und reibungsmodifizierende(n) Partikel (6) und Fasern (7), wobei der Anteil des Harzes (5) zwischen 20 Gew.-% und 70 Gew.-% und der Gesamtanteil an den reibungsmodifizierenden Partikel (6) und Fasern (7) zwischen 30 Gew.-% und 80 Gew.-% beträgt, wobei weiter der Anteil an Fasern (7) ausgewählt ist aus einem Bereich mit einer unteren Grenze von 2 Gew.-% und 15 Gew.-%, und die reibungsmodifizierenden Partikel (6) durch eine Mischung aus Kohlenstoff und Kieselgurpartikel in einem Gesamtanteil von 28 Gew.-% bis 65 Gew.-% gebildet sind, wobei die reibungsmodifizierenden Partikel (6) und Fasern (7) mit dem Harz (5) oder der Harzmischung vermischt sind, **dadurch gekennzeichnet, dass** die Kieselgurpartikel durch Kieselgur mit Wabenstruktur und Kieselgur mit knolliger Struktur gebildet sind.

2. Reibbelag (4) nach Anspruch 1, **dadurch gekennzeichnet, dass** der Kohlenstoff eine Mischung aus Graphit, pyrolytischer Kohle und aktiviertem Kohlenstoff ist.

3. Reibbelag (4) nach Anspruch 2, **dadurch gekennzeichnet, dass** der Anteil an Graphit zwischen 10 Gew.-% und 30 Gew.-% beträgt.

4. Reibbelag (4) nach Anspruch 2 oder 3, **dadurch gekennzeichnet, dass** der Anteil an pyrolytischer Kohle zwischen 15 Gew.-% und 35 Gew.-% beträgt.

5. Reibbelag (4) nach einem der Ansprüche 2 bis 4, **dadurch gekennzeichnet, dass** der Anteil an aktiviertem Kohlenstoff zwischen 5 Gew.-% und 15 Gew.-% beträgt.

6. Reibbelag (4) nach einem der Ansprüche 1 bis 5, **dadurch gekennzeichnet, dass** der Anteil an Celit zwischen 2 Gew.-% und 7 Gew.-% beträgt.

7. Reibbelag (4) nach einem der Ansprüche 1 bis 6, **dadurch gekennzeichnet, dass** der Anteil an Diatomeenerde zwischen 5 Gew.-% und 15 Gew.-% beträgt.

8. Reibbelag (4) nach einem der Ansprüche 1 bis 7, **dadurch gekennzeichnet, dass** weiters Hartpartikel in einem Anteil zwischen 2 Gew.-% und 8 Gew.-% enthalten sind.

9. Reibbelag (4) nach Anspruch 8, **dadurch gekennzeichnet, dass** die Hartpartikel ausgewählt sind aus einer Gruppe bestehend aus oder umfassend ZrSiO₄, SiC, SiO₂, Al₂O₃, Silikate.

10. Reibbelag (4) nach einem der Ansprüche 1 bis 9, **dadurch gekennzeichnet, dass** die reibungsmodifizierenden Partikel (6) eine maximale Partikelgröße zwischen 0,1 µm und 80 µm aufweisen.

11. Reibbelag (4) nach Anspruch 8 oder 9, **dadurch gekennzeichnet, dass** die Hartpartikel eine maximale Partikelgröße zwischen 0,1 µm und 80 µm aufweisen.

12. Reibbelag (4) nach einem der Ansprüche 1 bis 11, **dadurch gekennzeichnet, dass** die Fasern (7) eine Länge zwischen 20 µm und 400 µm aufweisen.

13. Reibbelag (4) nach einem der Ansprüche 1 bis 12, **dadurch gekennzeichnet, dass** die Mischung aus reibungsmodifizierenden Partikel (6) und/oder Fasern (7) und dem Harz (5) auf eine Faserschicht (13) aufgetragen ist.

14. Reibbelag (4) nach Anspruch 13, **dadurch gekennzeichnet, dass** die Faserschicht (13) ein Faservlies ist.

15. Reibbelag (4) nach Anspruch 13 oder 14, **dadurch gekennzeichnet, dass** das Faservlies aus Acrylfasern oder Aramidfasern besteht.

16. Reibbelag (4) nach einem der Ansprüche 13 bis 15, **dadurch gekennzeichnet, dass** die Faserschicht (13) aus Fasern (14) mit einer Länge zwischen 100 µm und 100 mm besteht oder diese aufweist.

17. Reibbelag (4) nach einem der Ansprüche 1 bis 16, **dadurch gekennzeichnet, dass** die reibungsmodifizierende(n) Partikel (6) und/oder Fasern (7) homogen in dem Harz (5) verteilt sind.

18. Reibelement (1) umfassend ein Trägerelement (2), das auf zumindest einer seiner Oberflächen (3) einen Reibbelag (4) aufweist, **dadurch gekennzeichnet, dass** der Reibbelag (4) nach einem der Ansprüche 1 bis 17 gebildet ist.

19. Reibelement (1) nach Anspruch 18, **dadurch gekennzeichnet, dass** der Reibbelag (4) direkt oder über eine weitere Harzschicht mit dem Trägerelement (2) verbunden ist.

## Claims

1. A friction lining (4) comprising or consisting of a resin (5) or a resin mixture which creates the matrix of the friction lining (4) and friction-modifying particles (6) and fibres (7), wherein the proportion of resin (5) is between 20 wt.-% and 70 wt.-% and the total proportion of friction-modifying particles (6) and fibres (7) is between 30 wt.-% and 80 wt.-%, wherein the proportion of fibres (7) is further selected from a from a range with a lower limit of 2 wt.-% and 15 wt.-% and the friction-modifying particles (6) are created by a mixture of carbon and diatomite in a total proportion of 28 wt.-% to 65 wt.-%, wherein the friction-modifying particles (6) and fibres (7) are mixed with the resin (5) or the resin mixture, **characterized in that** the diatomite particles are created by diatomite with a honeycomb structure and diatomite with a cloddy structure.

2. The friction lining (4) according to claim 1, **characterized in that** the carbon is a mixture of graphite, pyrolytic carbon and activated carbon.

3. The friction lining (4) according to claim 2, **characterized in that** the proportion of graphite is between 10 wt.-% and 30 wt.-%.

4. The friction lining (4) according to claim 2 or 3, **characterized in that** the proportion of pyrolytic carbon is between 15 wt.-% and 35 wt.-%.

5. The friction lining (4) according to one of claims 2 to 4, **characterized in that** the proportion of activated carbon is between 5 wt.-% and 15 wt.-%.

6. The friction lining (4) according to one of claims 1 to 5, **characterized in that** the proportion of Celit is between 2 wt.-% and 7 wt.-%.

7. The friction lining (4) according to one of claims 1 to 6, **characterized in that** the proportion of diatomaceous earth is between 5 wt.-% and 15 wt.-%.

8. The friction lining (4) according to one of claims 1 to 7, **characterized in that** it also contains hard particles in a proportion of between 2 wt.-% and 8 wt.-%.

9. The friction lining (4) according to claim 8, **characterized in that** the hard particles are selected from a group consisting of or comprising ZrSiO₄, SiC, SiO₂, Al₂O₃, silicates.

10. The friction lining (4) according to one of claims 1 to 9, **characterized in that** the friction-modifying particles (6) have a maximum particle size of between 0.1 µm and 80 µm.

11. The friction lining (4) according to claim 8 or 9, **characterized in that** the hard particles have a maximum particle size of between 0.1 µm and 80 µm.

12. The friction lining (4) according to one of claims 1 to 11, **characterized in that** the fibres (7) have a length of between 20 µm and 400 µm.

13. The friction lining (4) according to one of claims 1 to 12, **characterized in that** the mixture of friction-modifying particles (6) and/or fibres (7) and the resin (5) is applied onto a fibre layer (13).

14. The friction lining (4) according to claim 13, **characterized in that** the fibre layer (13) is a fibre fleece.

15. The friction lining (4) according to claim 13 or 14, **characterized in that** the fibre fleece is made of acrylic fibres or aramid fibres.

16. The friction lining (4) according to one of claims 13 to 15, **characterized in that** the fibre layer (13) consists of fibres (14) with a length of between 100 µm and 100 mm or comprises the latter.

17. The friction lining (4) according to one of claims 1 to 16, **characterized in that** the friction-modifying particles (6) and/or fibres (7) are uniformly distributed in the resin (5).

18. A friction element (1) comprising a support element (2) which comprises a friction lining (4) on at least one of its surfaces (3), **characterized in that** the friction lining (4) is formed according to one of claims 1 to 17.

19. The friction element (1) according to claim 18, **characterized in that** the friction lining (4) is joined directly or via an additional resin layer to the support element (2).

## Revendications

1. Garniture de friction (4) comprenant ou constitué d'une résine (5) ou d'un mélange de résine, qui constitue la matrice de la garniture de friction (4), et des particules modifiant la friction (6) et des fibres (7), la proportion de résine (5) étant entre 20 % en poids et 70 % en poids et la proportion totale de particules modifiant la friction (6) et de fibres (7) étant entre 30 % en poids et 80 % en poids, la proportion de fibres (7) étant sélectionnée dans un intervalle avec une limite inférieure de 2 % en poids et de 15 % en poids et les particules modifiant la friction (6) étant constituées d'un mélange de carbone et de particules de diatomite avec une proportion totale de 28 % en poids à 65 % en poids, les particules modifiant la friction (6) et les fibres (7) étant mélangées avec la résine (5) ou le mélange de résine, **caractérisée en ce que** les particules de diatomite sont constituées de diatomite avec une structure alvéolée et de diatomite avec une structure bulbeuse.

2. Garniture de friction (4) selon la revendication 1, **caractérisée en ce que** le carbone est un mélange de graphite, de charbon pyrolytique et de charbon actif.

3. Garniture de friction (4) selon la revendication 2, **caractérisée en ce que** la proportion de graphite est entre 10 % en poids et 30 % en poids.

4. Garniture de friction (4) selon la revendication 2 ou 3, **caractérisée en ce que** la proportion de charbon pyrolytique est entre 15 % en poids et 35 % en poids.

5. Garniture de friction (4) selon l'une des revendications 2 à 4, **caractérisée en ce que** la proportion de charbon actif est entre 5 % en poids et 15 % en poids.

6. Garniture de friction (4) selon l'une des revendications 1 à 5, **caractérisée en ce que** la proportion de célite est entre 2 % en poids et 7 % en poids.

7. Garniture de friction (4) selon l'une des revendications 1 à 6, **caractérisée en ce que** la proportion de terre de diatomées est entre 5 % en poids et 15 % en poids.

8. Garniture de friction (4) selon l'une des revendications 1 à 7, **caractérisée en ce que**, en outre, des particules dures avec une proportion entre 2 % en poids et 8 % en poids sont contenues.

9. Garniture de friction (4) selon la revendication 8, **caractérisée en ce que** les particules dures sont sélectionnées dans un groupe constitué ou comprenant du ZrSiO₄, SiC, SiO₂, Al₂O₃, silicates.

10. Garniture de friction (4) selon l'une des revendications 1 à 9, **caractérisée en ce que** les particules modifiant la fiction (6) présentent une taille maximale entre 0,1 µm et 80 µm.

11. Garniture de friction (4) selon la revendication 8 ou 9, **caractérisée en ce que** les particules dures présentent une taille maximale entre 0,1 µm et 80 µm.

12. Garniture de friction (4) selon l'une des revendications 1 à 11, **caractérisée en ce que** les fibres (7) présentent une longueur entre 20 µm et 400 µm.

13. Garniture de friction (4) selon l'une des revendications 1 à 12, **caractérisée en ce que** le mélange de particules modifiant la friction (6) et/ou de fibres (7) et de résine (5) est appliqué sur une couche de fibres (13).

14. Garniture de friction (4) selon la revendication 13, **caractérisée en ce que** la couche de fibres (13) est un tissu non tissé.

15. Garniture de friction (4) selon la revendication 13 ou 14, **caractérisée en ce que** le tissu non tissé est constitué de fibres acryliques ou de fibres aramides.

16. Garniture de friction (4) selon l'une des revendications 13 à 15, **caractérisée en ce que** la couche de fibres (13) est constituée ou comprend des fibres (14) avec une longueur entre 100 µm et 100 mm.

17. Garniture de friction (4) selon l'une des revendications 1 à 16, **caractérisée en ce que** les particules modifiant la friction (6) et/ou les fibres (7) sont réparties de manière homogène dans la résine (5).

18. Élément de friction (1) comprenant un élément porteur (2), qui comprend, au moins sur une de ses faces supérieures (3), une garniture de friction (4), **caractérisé en ce que** la garniture de friction (4) est conçue selon l'une des revendications 1 à 17.

19. Élément de friction (1) selon la revendication 18, **caractérisé en ce que** la garniture de friction (4) est relié, directement ou par l'intermédiaire d'une couche de résine supplémentaire, avec l'élément porteur (2).
